# EUROPEAN PATENT APPLICATION

(11) **EP 4 834 563 A1**
(43) Date of publication of application: **04.11.2026**
(21) Application number: 26169639.7
(22) Date of filing: 31.03.2026
(51) Int. Cl.: B29C 48/445, B29B 7/42, B29C 48/25, B29C 48/38, B29C 48/92, B29C 48/265

(54) **EXTRUDER**

(30) Priority: 01.05.2025 JP 2025076415
(71) Applicant: Sumitomo Rubber Industries, Ltd., Kobe-shi, Hyogo 651-0072 (JP)
(72) Inventor: SHOKYU, KATSUYA, Kobe-shi, Hyogo, 651-0072 (JP); SAKAMOTO, MASAYUKI, Kobe-shi, Hyogo, 651-0072 (JP)
(74) Representative: Manitz Finsterwald Patent- und Rechtsanwaltspartnerschaft mbB

(57) **Abstract**

An extruder 1 comprises a barrel 2, a feeding portion 3 for feeding a raw material into the barrel 2, and a screw 5 for moving the raw material in its conveying direction "a". The screw 5 include a first screw 5A disposed upstream in the conveying direction "a", and a second screw 5B disposed coaxially with the first screw 5A on the downstream side in the conveying direction "a" of the first screw 5A. The first screw 5A is rotatable at a first number R1 of rotations per unit time. The second screw 5B is rotatable at a second number R2 of rotations per unit time different from the first number R1 of rotations.

## Description

### Technical field

The present invention relates to an extruder comprising coaxial screws.

### Background art

Extruders for extruding a raw material by the use of a screw have been widely known.
For example, Patent Document 1 listed below discloses an extruder having functionally-different zones, e.g. a dividing zone, a kneading zone and a pressurizing zone.

Patent Document 1: Japanese Patent Application Publication No. 2020-138522

### Summary of the Invention

### Problems to be solved by the Invention

In the extruder disclosed in Patent Document 1, as well as the number of rotations per unit time of the screw, the temperature of the screw is the same throughout the entire length of the screw.
Accordingly, it is not possible to adjust the number of rotations of the screw per unit time and the temperature of the screw according to the function required at each position in the barrel of the extruder. Therefore, in some cases, some compromise was required regarding the quality of the extruded raw material.

In view of the above circumstances, the present invention was made, and a primary objective of the present invention is to provide an extruder capable of improving the quality of the extruded raw material.

### Means for solving the problems

According to the present invention, an extruder comprises:
a barrel;
a feeding portion for feeding a raw material into the barrel; and
a screw for moving the fed raw material in its conveying direction, wherein
the screw includes a first screw arranged upstream in the conveying direction, and a second screw arranged coaxially with the first screw on the downstream side in the conveying direction of the first screw,
the first screw is capable of rotating at a first number of rotations per unit time, and
the second screw is capable of rotating at a second number of rotations per unit time which is different from the first number of rotations.

### Effects of the Invention

According to the present invention, by having the above-described configuration, the extruder can improve the quality of the extruded raw material.

### Brief description of the Drawings

FIG. 1 is a cross-cross sectional view of an extruder as a first embodiment of the present invention.
FIG. 2 is a cross-cross sectional view of an extruder as a second embodiment of the present invention.
FIG. 3 is a cross-cross sectional view of an extruder as a third embodiment of the present invention.
FIG. 4 is a cross-cross sectional view of an extruder as a fourth embodiment of the present invention.
FIG. 5 is a cross-cross sectional view of an extruder as a fifth embodiment of the present invention.
FIG. 6 is a cross-cross sectional view of an extruder as a sixth embodiment of the present invention.
FIG. 7 is a cross-cross sectional view of an extruder as a seventh embodiment of the present invention.
FIG. 8 is a cross-cross sectional view of an extruder as a eighth embodiment of the present invention.
FIG. 9 is a cross-cross sectional view of an extruder as a ninth embodiment of the present invention.

### Mode for carrying out the Invention

Embodiments of the present invention will now be described in detail in conjunction with the accompanying drawings.

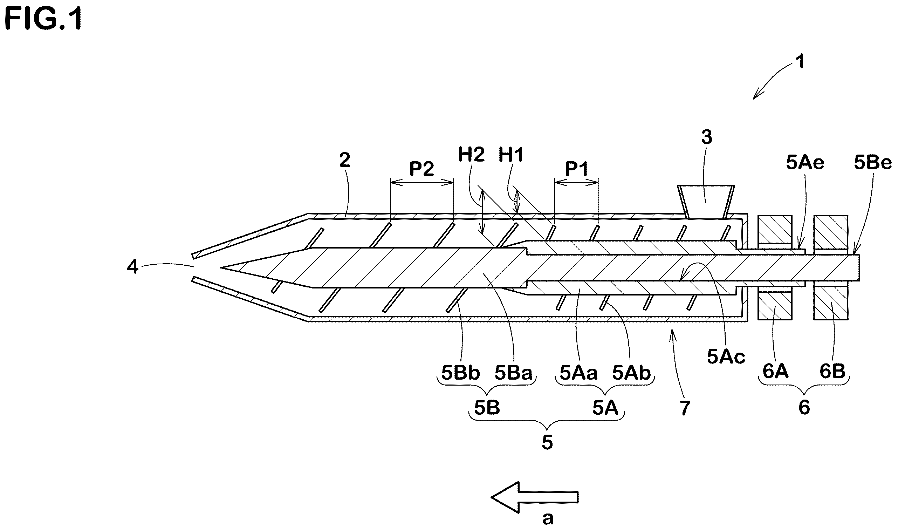

FIG. 1 is a cross-cross sectional view of an extruder 1 as a first embodiment of the present invention.
As shown in FIG. 1, the extruder 1 in this embodiment comprises a barrel 2, a feeding portion 3 for feeding a raw material such as rubber, resin and additives, into the barrel 2, and a discharging portion 4 for discharging the kneaded raw material from the barrel 2.

The extruder 1 in this embodiment comprises a screw 5 for forcing or pushing the raw material fed into the barrel 2 toward a conveying direction "a" while kneading the raw material, and a drive unit 6 for rotating the screw 5.

The screw 5 in this embodiment includes a first screw 5A arranged upstream in the conveying direction "a", and a second screw 5B arranged coaxially with the first screw 5A on the downstream side in the conveying direction "a" of the first screw 5A. In such screw 5, as the first screw 5A is coaxial with the second screw 5B, the raw material can smoothly transfer from the first screw 5A to the second screw 5B.

Preferably, the first screw 5A comprises a first screw shaft 5Aa extending along the conveying direction "a" of the raw material, and a first flight 5Ab extending spirally around the first screw shaft 5Aa. Such extruder 1 can push and smoothly move the raw material toward the discharging portion 4.

Preferably, the second screw 5B comprises a second screw shaft 5Ba extending along the conveying direction "a" of the raw material, and a second flight 5Bb extending spirally around the second screw shaft 5Ba. Such extruder 1 can push and smoothly move the raw material toward the discharging portion 4.

The first screw 5A is rotatable at a first number R1 of rotations per unit time. The second screw 5B is rotatable at a second number R2 of rotations per unit time, which is different from the first number R1 of rotations.

In such screw 5, the first number R1 of rotations can be adjusted according to a function required at the first screw 5A position within the barrel 2, and the second number R2 of rotations can be adjusted according to a function required at the second screw 5B position within the barrel 2.
Here, each of the above-said function required at the first screw 5A position and the above-said function required at the second screw 5B position includes one or more functions.

Such extruder 1 can adjust the number of rotations per unit time of the respective screw 5, depending on its position within the barrel 2.

Further, in the extruder 1 in this embodiment, the first screw 5A and the second screw 5B can be adjusted to different temperatures. Thus, the first screw 5A and the second screw 5B can be controlled to optimal temperatures depending on the functions required for the respective screws.
As a result, the extruder 1 in this embodiment can improve the quality of the extruded raw material.

It is desirable that the first number R1 of rotations is adjusted based on the rotational torque of the first screw 5A.
It is desirable that the second number R2 of rotations is adjusted based on the rotational torque of the second screw 5B.
In such screw 5, it is easy to adjust the number of rotations per unit time of the respective screw depending on its position in the barrel 2.

The drive unit 6 in this example comprises a driving source (e.g. motor, not shown), a first driving body 6A for transmitting the rotational force of the driving source to the first screw 5A, and a second driving body 6B for transmitting the rotational force of the driving source to the second screw 5B.

It is desirable that, by the use of a transmission or the like provided for the driving source, for example, it is possible to adjust the number of rotations per unit time of the first driving body 6A and the number of rotations per unit time of the second driving body 6B independently from each other. In such drive unit 6, it is possible to rotate the first screw 5A at an arbitrary first number R1 of rotations and the second screw 5B at an arbitrary second number R2 of rotations.

The first screw shaft 5Aa of the first screw 5A in this embodiment is provided therein with a through hole 5Ac extending axially of the screw shaft.
The first driving body 6A is arranged, for example, at an end 5Ae of the first screw shaft 5Aa on the upstream side in the conveying direction "a".
Thus, the first screw 5A can be rotated without interfering with the movement of the raw material in the conveying direction "a".

It is desirable that, passing through the through hole 5Ac of the first screw 5A, the second screw 5B extends from the upstream side to the downstream side of the first screw 5A in the conveying direction "a".
The second driving body 6B is arranged, for example, at the end 5Be of the second screw shaft 5Ba on the upstream side in the conveying direction "a".
Thus, the second screw 5B can be rotated without interfering with the movement of the raw material in the conveying direction "a".

The extruder 1 in this embodiment comprises a kneading zone 7 for kneading the raw material.
The kneading zone 7 is arranged, for example, in the position of the first screw 5A. The first flight 5Ab of the first screw 5A in this embodiment has a pitch P1 and a height H1 suitable for kneading the raw material. The first number R1 of rotations is preferably set to values suitable for kneading the raw material.
Such first screw 5A can efficiently perform the function as of the kneading zone 7.

The second flight 5Bb of the second screw 5B in this embodiment has a pitch P2 and a height H2. The pitch P2 is preferably larger than the pitch P1 of the first flight 5Ab of the first screw 5A. The height H2 is preferably larger than the height H1 of the first flight 5Ab of the first screw 5A. The second number R2 of rotations is preferably set to values smaller than the first number R1 of rotations. The temperature of the second screw 5B may be adjusted to, for example, different values from that of the first screw 5A. Therefore, such second screw 5B becomes possible to exert a function of discharging a fixed amount of the raw material kneaded in the kneading zone 7 without generating heat, so as to further improve the quality of the discharged raw material.

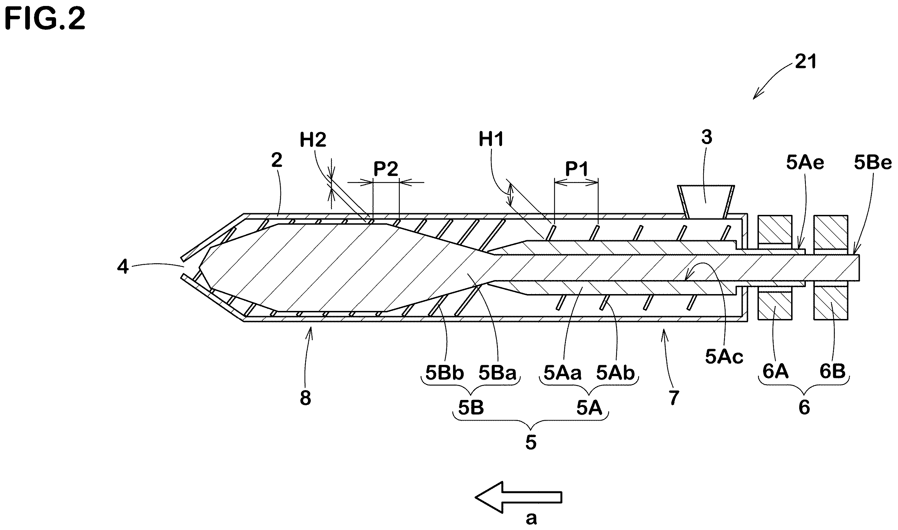

FIG. 2 is a cross-cross sectional view of an extruder 21 as a second embodiment of the present invention.
The same components as those in the above-described first embodiment are assigned with the same reference numerals, and the description thereof will be omitted.

As shown in FIG. 2, the extruder 21 in the second embodiment comprises the barrel 2, the feeding portion 3, the discharging portion 4, the screw 5, and the drive unit 6, similarly to the extruder 1 described above.

The screw 5 of the second embodiment includes the first screw 5A and the second screw 5B. The first screw 5A preferably comprises the first screw shaft 5Aa and the first flight 5Ab. The second screw 5B preferably comprises the second screw shaft 5Ba and the second flight 5Bb.

In the second embodiment, the first screw 5A can be rotated at a first number R1 of rotations per unit time, and the second screw 5B can be rotated at a second number R2 of rotations per unit time which is different from the first number R1 of rotations. Therefore, in the extruder 21 in the second embodiment, it is possible to adjust the number of rotations per unit time of the respective screw depending on its position within the barrel 2.

The drive unit 6 comprises, for example, the first driving body 6A and the second driving body 6B. In such drive unit 6, it is possible to rotate the first screw 5A at the first number R1 of rotations and the second screw 5B at the second number R2 of rotations.

The first screw shaft 5Aa of the first screw 5A in this example is provided therein with the through hole 5Ac extending axially of the screw shaft.
The first driving body 6A is arranged, for example, at the end 5Ae of the first screw shaft 5Aa on the upstream side in the conveying direction "a".
Thus, the first screw 5A can be rotated without interfering with the movement of the raw material in the conveying direction "a".

It is desirable that, passing through the through hole 5Ac of the first screw 5A, the second screw 5B extends from the upstream side to the downstream side of the first screw 5A in the conveying direction "a".
The second driving body 6B is arranged, for example, at the end 5Be of the second screw shaft 5Ba on the upstream side in the conveying direction "a".
Thus, the second screw 5B can be rotated without interfering with the movement of the raw material in the conveying direction "a".

In the second embodiment, the extruder 21 comprises the kneading zone 7 for kneading the raw material, and a pressurizing portion 8 for pressurizing the raw material.

The kneading zone 7 is arranged, for example, in the position of the first screw 5A. The first flight 5Ab of the first screw 5A in the second embodiment has the pitch P1 and the height H1 suitable for kneading the raw material. The first number R1 of rotations is preferably set to values suitable for kneading the raw material. Such first screw 5A can efficiently perform the function as of the kneading zone 7.

The pressurizing portion 8 is arranged, for example, in the position of the second screw 5B.

In the second embodiment, the pitch P2 of the second flight 5Bb of the second screw 5B is smaller than the pitch P1 of the first flight 5Ab of the first screw 5A. In the second embodiment, the height H2 of the second flight 5Bb in the pressurizing portion 8 of the second screw 5B is smaller than the height H1 of the first flight 5Ab of the first screw 5A as a result of the diameter of the second screw shaft 5Ba which is increased in the pressurizing portion 8. Thus, the flow path becomes narrowed and the raw material is pressurized.
The temperature of the second screw 5B may be adjusted to, for example, values different from that of the first screw 5A.
Such second screw 5B can exert a function of pressurizing the raw material without generating heat, so as to further improve the quality of the discharged raw material.

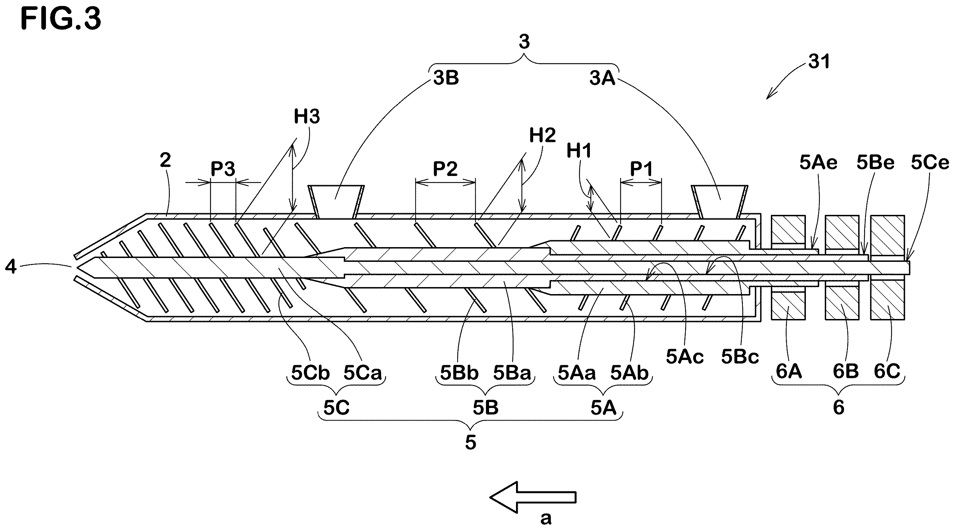

FIG. 3 is a cross-cross sectional view of an extruder 31 as a third embodiment of the present invention.
The same components as those in the above-described embodiments are assigned with the same reference numerals, and the description thereof will be omitted.

As shown in FIG. 3, the extruder 31 in the third embodiment comprises the barrel 2, the feeding portion 3, the discharging portion 4, the screw 5, and the drive unit 6, similarly to the extruder 1 described above.

The screw 5 of the third embodiment includes the first screw 5A, the second screw 5B, and a third screw 5C arranged coaxially with the second screw 5B on the downstream side of the second screw 5B in the conveying direction "a".

The first screw 5A preferably comprises the first screw shaft 5Aa and the first flight 5Ab. The second screw 5B preferably comprises the second screw shaft 5Ba and the second flight 5Bb. The third screw 5C preferably comprises a third screw shaft 5Ca extending along the conveying direction "a" of the raw material, and a third flight 5Cb extending spirally around the third screw shaft 5Ca.

In the third embodiment, the first screw 5A can be rotated at a first number R1 of rotations per unit time, and the second screw 5B can be rotated at a second number R2 of rotations per unit time which is different from the first number R1 of rotations. The third screw 5C of the third embodiment can be rotated at a third number R3 of rotations per unit time which is different from the second number R2 of rotations.

In such screw 5, the first number R1 of rotations can be adjusted according to the function required at the first screw 5A position within the barrel 2.
Further, in such screw 5, the second number R2 of rotations can be adjusted according to the function required at the second screw 5B position within the barrel 2.

Furthermore, in this screw 5, the third number R3 of rotations can be adjusted according to the function required at the third screw 5C position within the barrel 2. Therefore, the extruder 31 in the third embodiment can adjust the number of rotations per unit time of the respective screw depending on its position within the barrel 2. Here, the above-said function required at the third screw 5C position includes one or more functions.

The drive unit 6 comprises, for example, the first driving body 6A, the second driving body 6B, and a third driving body 6C which is for transmitting the rotational force of the driving source to the third screw 5C.
Such drive unit 6 can rotate the first screw 5A at the first number R1 of rotations, the second screw 5B at the second number R2 of rotations, and the third screw 5C at the third number R3 of rotations.

The first screw shaft 5Aa of the first screw 5A is, for example, provided therein with the through hole 5Ac extending axially.
The first driving body 6A is arranged, for example, at the end 5Ae of the first screw shaft 5Aa on the upstream side in the conveying direction "a".
Such first screw 5A can be rotated without interfering with the movement of the raw material in the conveying direction "a".

It is desirable that, passing through the through hole 5Ac of the first screw 5A, the second screw 5B extends from the upstream side to the downstream side of the first screw 5A.

The second screw shaft 5Ba of the second screw 5B of the third embodiment is provided therein with a through hole 5Bc extending axially of the shaft.
The second driving body 6B is arranged, for example, at the end 5Be of the second screw shaft 5Ba on the upstream side in the conveying direction "a".
Such second screw 5B can be rotated without interfering with the movement of the raw material in the conveying direction "a".

It is desirable that, passing through the through-hole 5Bc of the second screw 5B, the third screw extends from the upstream side to the downstream side of the second screw 5B.
The third driving body 6C is arranged, for example, at an end 5Ce of the third screw shaft 5Ca on the upstream side in the conveying direction "a".
Such third screw 5C can be rotated without interfering with the movement of the raw material in the conveying direction "a".

It is desirable that the pitch P1 and the height H1 of the first flight 5Ab of the first screw 5A, the pitch P2 and the height H2 of the second flight 5Bb of the second screw 5B, and a pitch P3 and a height H3 of the third flight 5Cb of the third screw 5C are each appropriately set according to the function required for each screw.

It is desirable that the temperature of the first screw 5A, the temperature of the second screw 5B, and a temperature of the third screw 5C are each appropriately set according to the function required for each screw.

In such screw 5, by rotating the respective screws at the first number R1 of rotations, the second number R2 of rotations, and the third number R3 of rotations that are respectively suitable for the respective screws, it becomes possible to further improve the quality of the discharged raw material.

In the third embodiment, the rotational direction of the first screw 5A and the rotational direction of the second screw 5B are different from each other.
Such screw 5 can impart large shear to the raw material when transferring the raw material from the first screw 5A to the second screw 5B, which helps to improve the quality of the discharged raw material.

In the third embodiment, the feeding portion 3 includes
a first feeding portion 3A provided at the position of the first screw 5A, and a second feeding portion 3B provided at the position of the second screw 5B. For example, the second feeding portion 3B may be provided at the position of the third screw 5C.
Such feeding portion 3 can feed necessary raw materials according to the positions of the feeding portions.

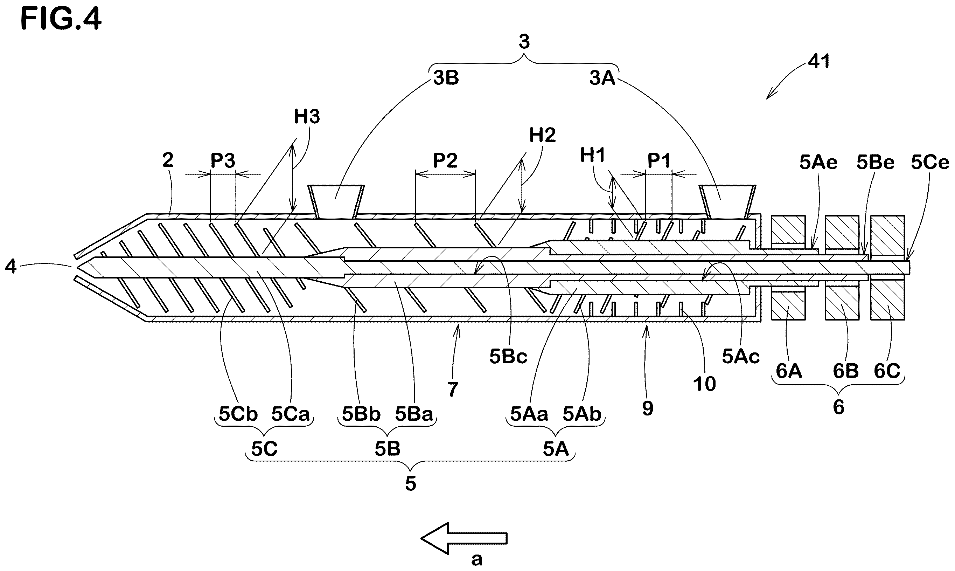

FIG. 4 is a cross-cross sectional view of an extruder 41 as a fourth embodiment of the present invention.
The same components as those in the above-described embodiments are assigned with the same reference numerals, and the description thereof will be omitted.

As shown in FIG. 4, the extruder 41 in the fourth embodiment comprises the barrel 2, the feeding portion 3, the discharging portion 4, the screw 5, and the drive unit 6, similarly to the extruder 1 described above.

The screw 5 of the fourth embodiment includes the first screw 5A, the second screw 5B, and the third screw 5C. The first screw 5A preferably comprises the first screw shaft 5Aa and the first flight 5Ab. The second screw 5B preferably comprises the second screw shaft 5Ba and the second flight 5Bb. The third screw 5C preferably comprises the third screw shaft 5Ca and the third flight 5Cb.

In the fourth embodiment, the first screw 5A can be rotated at a first number R1 of rotations per unit time, the second screw 5B can be rotated at a second number R2 of rotations which is different from the first number R1 of rotations, and the third screw 5C can be rotated at a third number R3 of rotations which is different from the second number R2 of rotations per unit time.
Therefore, the extruder 41 in the fourth embodiment can adjust the number of rotations per unit time of the respective screw depending on their respective positions within the barrel 2.

The drive unit 6 in this example comprises the first driving body 6A, the second driving body 6B, and the third driving body 6C.
Such drive unit 6 can rotate the first screw 5A at the first number R1 of rotations, the second screw 5B at the second number R2 of rotations, and the third screw 5C at the third number R3 of rotations.

The first screw shaft 5Aa of the first screw 5A is provided therein with the through hole 5Ac extending axially of the shaft.
The first driving body 6A is arranged, for example, at the end 5Ae of the first screw shaft 5Aa on the upstream side in the conveying direction "a".
Such first screw 5A can be rotated without interfering with the movement of the raw material in the conveying direction "a".

It is desirable that, passing through the through hole 5Ac of the first screw 5A, the second screw 5B extends from the upstream side to the downstream side of the first screw 5A.
The second screw shaft 5Ba of the second screw 5B is, for example, provided therein with the through hole 5Bc extending axially of the shaft.
The second driving body 6B is arranged, for example, at the end 5Be of the second screw shaft 5Ba on the upstream side in the conveying direction "a".
Such second screw 5B can be rotated without interfering with the movement of the raw material in the conveying direction "a".

It is desirable that, passing through the through-hole 5Bc of the second screw 5B, the third screw 5C extends from the upstream side to the downstream side of the second screw 5B.
The third driving body 6C is arranged, for example, at the end 5Ce of the third screw shaft 5Ca on the upstream side in the conveying direction "a".
Such third screw 5C can be rotated without interfering with the movement of the raw material in the conveying direction "a".

It is desirable that the pitch P1 and the height H1 of the first flight 5Ab of the first screw 5A, the pitch P2 and the height H2 of the second flight 5Bb of the second screw 5B, and the pitch P3 and the height H3 of the third flight 5Cb of the third screw 5C are each appropriately set according to the function required for each screw.

It is desirable that the temperature of the first screw 5A, the temperature of the second screw 5B, and the temperature of the third screw 5C are each appropriately set according to the function required for each screw.
In such screw 5, by rotating the respective screws at the first number R1 of rotations, the second number R2 of rotations, and the third number R3 of rotations that are respectively suitable for the respective screws, it becomes possible to further improve the quality of the discharged raw material.

In the fourth embodiment, the rotational direction of the first screw 5A and the rotational direction of the second screw 5B are different from each other. Such screw 5 can impart large shear to the raw material when transferring the raw material from the first screw 5A to the second screw 5B, which helps to improve the quality of the discharged raw material.

In the fourth embodiment, the feeding portion 3 includes the first feeding portion 3A provided at the position of the first screw 5A, and the second feeding portion 3B provided at the position of the second screw 5B.
Such feeding portion 3 can feed necessary raw materials according to the positions of the feeding portions.

The extruder 41 in the fourth embodiment comprises the kneading zone 7 for kneading the raw material, and a dividing zone 9 for dividing the raw material. The dividing zone 9 of the fourth embodiment is arranged at the position of the first screw 5A. The dividing zone 9 in this example comprises a plurality of pins 10 protruding from the barrel 2 toward the inside thereof.
Such dividing zone 9 can efficiently plasticize the fed raw material, and improve the quality of the discharged raw material.

The kneading zone 7 of the fourth embodiment is arranged at the position of the second screw 5B. Such kneading zone 7 can efficiently knead the raw material divided by the dividing zone 9.

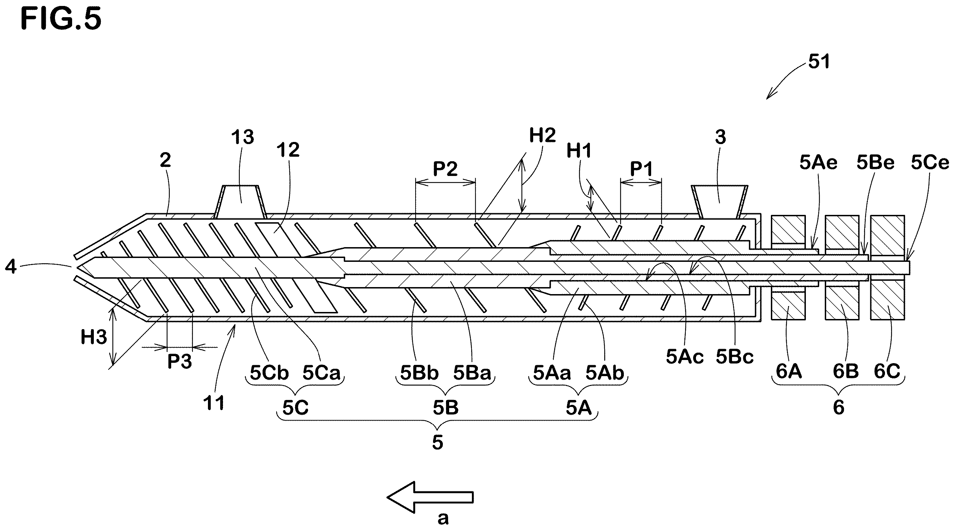

FIG. 5 is a cross-cross sectional view of an extruder 51 as a fifth embodiment according to the present invention.
The same components as those in the above-described embodiments are assigned with the same reference numerals, and the description thereof will be omitted.

As shown in FIG. 5, the extruder 51 in the fifth embodiment comprises the barrel 2, the feeding portion 3, the discharging portion 4, the screw 5, and the drive unit 6, similarly to the extruder 1 described above.

The screw 5 of the fifth embodiment includes the first screw 5A, the second screw 5B, and the third screw 5C. The first screw 5A preferably comprises the first screw shaft 5Aa and the first flight 5Ab. The second screw 5B preferably comprises the second screw shaft 5Ba and the second flight 5Bb. The third screw 5C preferably comprises the third screw shaft 5Ca and the third flight 5Cb.

In the fifth embodiment, the first screw 5A can be rotated at a first number R1 of rotations per unit time, the second screw 5B can be rotated at a second number R2 of rotations which is different from the first number R1 of rotations, and the third screw 5C can be rotated at a third number R3 of rotations which is different from the second number R2 of rotations per unit time.
Therefore, the extruder 51 of the fifth embodiment can adjust the number of rotations per unit time of the respective screw depending on their positions within the barrel 2.

The drive unit 6 comprises, for example, the first driving body 6A, the second driving body 6B, and the third driving body 6C.
Such drive unit 6 can rotate the first screw 5A at the first number R1 of rotations, the second screw 5B at the second number R2 of rotations, and the third screw 5C at the third number R3 of rotations.

The first screw shaft 5Aa of the first screw 5A is provided therein with the through hole 5Ac extending axially of the shaft.
The first driving body 6A is arranged, for example, at the end 5Ae of the first screw shaft 5Aa on the upstream side in the conveying direction "a".
Such first screw 5A can be rotated without interfering with the movement of the raw material in the conveying direction "a".

It is desirable that, passing through the through hole 5Ac of the first screw 5A, the second screw 5B extends from the upstream side to the downstream side of the first screw 5A.

The second screw shaft 5Ba of the second screw 5B is, for example, provided therein with the through hole 5Bc extending axially of the shaft.
The second driving body 6B is arranged, for example, at the end 5Be of the second screw shaft 5Ba on the upstream side in the conveying direction "a".
Such second screw 5B can be rotated without interfering with the movement of the raw material in the conveying direction "a".

It is desirable that, passing through the through-hole 5Bc of the second screw 5B, the third screw 5C extends from the upstream side to the downstream side of the second screw 5B.
The third driving body 6C is arranged, for example, at the end 5Ce of the third screw shaft 5Ca on the upstream side in the conveying direction "a".
Such third screw 5C can be rotated without interfering with the movement of the raw material in the conveying direction "a".

It is desirable that the pitch P1 and the height H1 of the first flight 5Ab of the first screw 5A, the pitch P2 and the height H2 of the second flight 5Bb of the second screw 5B, and the pitch P3 and the height H3 of the third flight 5Cb of the third screw 5C are each appropriately set according to the function required for each screw.

It is desirable that the temperature of the first screw 5A, the temperature of the second screw 5B, and the temperature of the third screw 5C are each appropriately set according to the function required for each screw.
In such screw 5, by rotating the respective screws at the first number R1 of rotations, the second number R2 of rotations, and the third number R3 of rotations that are respectively suitable for the respective screws, it becomes possible to further improve the quality of the discharged raw material.

In the fifth embodiment, the rotational direction of the first screw 5A and the rotational direction of the second screw 5B are different from each other.
Such screw 5 can impart large shear to the raw material when transferring the raw material from the first screw 5A to the second screw 5B, which helps to improve the quality of the discharged raw material.

The extruder 51 in the fifth embodiment comprises a degassing zone 11 for removing gas contained in the raw material.
The degassing zone 11 of the fifth embodiment is arranged at the position of the third screw 5C. The degassing zone 11 comprises, for example, a dam zone 12 for discharging gas from the raw material, and a vent zone 13 for sucking gas from the inside of the barrel 2.
Such degassing zone 11 can perform the function of discharging unnecessary gas from the fed raw material, and improve the quality of the discharged raw materials.

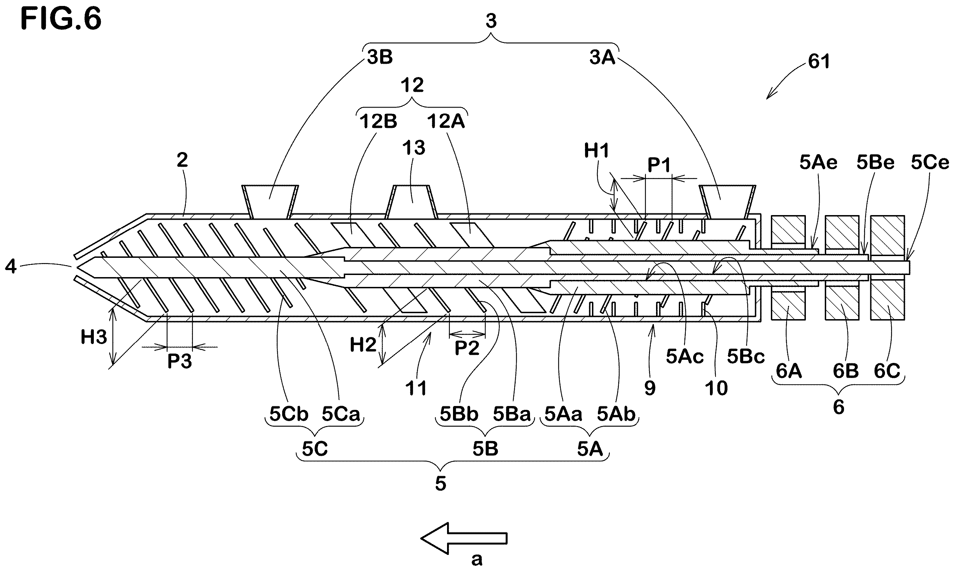

FIG. 6 is a cross-cross sectional view of an extruder 61 as a sixth embodiment according to the present invention.
The same components as those in the above-described embodiments are denoted by the same reference numerals, and the description thereof will be omitted.

As shown in FIG. 6, the extruder 61 in the sixth embodiment comprises the barrel 2, the feeding portion 3, the discharging portion 4, the screw 5, and the drive unit 6, similarly to the extruder 1 described above.

The screw 5 of the sixth embodiment includes the first screw 5A, the second screw 5B, and the third screw 5C. The first screw 5A preferably comprises the first screw shaft 5Aa and the first flight 5Ab. The second screw 5B preferably comprises the second screw shaft 5Ba and the second flight 5Bb. The third screw 5C preferably comprises the third screw shaft 5Ca and the third flight 5Cb.

In the sixth embodiment, the first screw 5A can be rotated at a first number R1 of rotations per unit time, the second screw 5B can be rotated at a second number R2 of rotations per unit time which is different from the first number R1 of rotations, and the third screw 5C can be rotated at a third number R3 of rotations per unit time which is different from the second number R2 of rotations per unit time.
Therefore, the extruder 61 of the sixth embodiment can adjust the number of rotations per unit time of the respective screw depending on their positions within the barrel 2.

The drive unit 6 comprises, for example, the first driving body 6A, the second driving body 6B, and the third driving body 6C.
Such drive unit 6 can rotate the first screw 5A at the first number R1 of rotations, the second screw 5B at the second number R2 of rotations, and the third screw 5C at the third number R3 of rotations.

The first screw shaft 5Aa of the first screw 5A is provided therein with the through hole 5Ac extending axially of the shaft.
The first driving body 6A is arranged, for example, at the end 5Ae of the first screw shaft 5Aa on the upstream side in the conveying direction "a".
Such first screw 5A can be rotated without interfering with the movement of the raw material in the conveying direction "a".

It is desirable that, passing through the through hole 5Ac of the first screw 5A, the second screw 5B extends from the upstream side to the downstream side of the first screw 5A.

The second screw shaft 5Ba of the second screw 5B is, for example, provided therein with the through hole 5Bc extending axially of the shaft.
The second driving body 6B is arranged, for example, at the end 5Be of the second screw shaft 5Ba on the upstream side in the conveying direction "a".
Such second screw 5B can be rotated without interfering with the movement of the raw material in the conveying direction "a".

It is desirable that, passing through the through-hole 5Bc of the second screw 5B, the third screw 5C extends from the upstream side to the downstream side of the second screw 5B.
The third driving body 6C is arranged, for example, at the end 5Ce of the third screw shaft 5Ca on the upstream side in the conveying direction "a".
Such third screw 5C can be rotated without interfering with the movement of the raw material in the conveying direction "a".

It is desirable that the pitch P1 and the height H1 of the first flight 5Ab of the first screw 5A, the pitch P2 and the height H2 of the second flight 5Bb of the second screw 5B, and the pitch P3 and the height H3 of the third flight 5Cb of the third screw 5C are each appropriately set according to the function required for each screw.

It is desirable that the temperature of the first screw 5A, the temperature of the second screw 5B, and the temperature of the third screw 5C are each appropriately set according to the function required for each screw.
In such screw 5, by rotating the respective screws at the first number R1 of rotations, the second number R2 of rotations, and the third number R3 of rotations that are respectively suitable for the respective screws, it becomes possible to further improve the quality of the discharged raw material.

In the sixth embodiment, the rotational direction of the first screw 5A and the rotational direction of the second screw 5B are different from each other.
Such screw 5 can impart large shear to the raw material when transferring the raw material from the first screw 5A to the second screw 5B, which helps to improve the quality of the discharged raw material.

The feeding portion 3 of the sixth embodiment includes the first feeding portion 3A arranged at the position of the first screw 5A, and the second feeding portion 3B arranged at the position of the third screw 5C.
Such feeding portion 3 can feed necessary raw materials according to the positions of the feeding portions.

The extruder 61 in the sixth embodiment comprises the dividing zone 9 for dividing the raw material, and the degassing zone 11 for removing gas contained in the raw material.
The dividing zone 9 of the sixth embodiment is arranged at the position of the first screw 5A. The dividing zone 9 in this example comprises a plurality of pins 10 protruding from the barrel 2 toward the inside thereof.
Such dividing zone 9 can efficiently plasticize the fed raw material, and improve the quality of the discharged raw material.

The degassing zone 11 of the sixth embodiment is arranged at the position of the second screw 5B. The degassing zone 11 comprises, for example, the dam zone 12 for discharging gas from the raw material, and the vent zone 13 for sucking gas from the inside of the barrel 2.
The dam zone 12 of the sixth embodiment includes a first dam zone 12A located on the upstream side of the vent zone 13 in the conveying direction "a", and a second dam zone 12B located on the downstream side of the vent zone 13 in the conveying direction "a".
Such degassing zone 11 can perform the function of discharging unnecessary gas from the plasticized raw material, and can improve the quality of the discharged raw material.

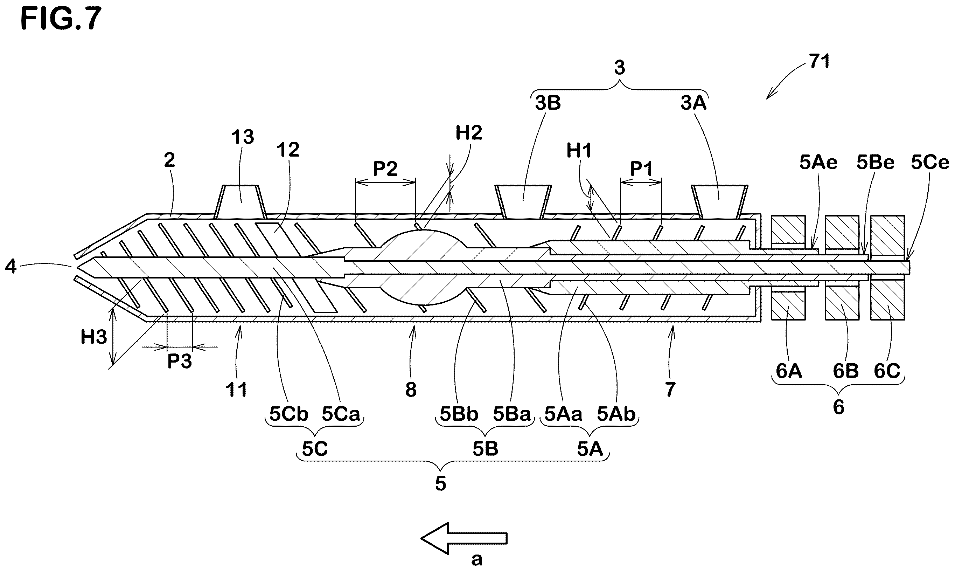

FIG. 7 is a cross-cross sectional view of an extruder 71 as a seventh embodiment according to the present invention.
The same components as those in the above-described embodiments are denoted by the same reference numerals, and the description thereof will be omitted.

As shown in FIG. 7, the extruder 71 of the seventh embodiment comprises the barrel 2, the feeding portion 3, the discharging portion 4, the screw 5, and the drive unit 6, similarly to the extruder 1 described above.

The screw 5 of the seventh embodiment includes the first screw 5A, the second screw 5B, and the third screw 5C. The first screw 5A preferably comprises the first screw shaft 5Aa and the first flight 5Ab. The second screw 5B preferably comprises the second screw shaft 5Ba and the second flight 5Bb. The third screw 5C preferably comprises the third screw shaft 5Ca and the third flight 5Cb.

In the seventh embodiment, the first screw 5A can be rotated at a first number R1 of rotations per unit time, the second screw 5B can be rotated at a second number R2 of rotations per unit time which is different from the first number R1 of rotations, and the third screw 5C can be rotated at a third number R3 of rotations per unit time which is different from the second number R2 of rotations per unit time.
Therefore, the extruder 71 of the seventh embodiment can adjust the number of rotations per unit time of the respective screw depending on their positions within the barrel 2.

The drive unit 6 comprises, for example, the first driving body 6A, the second driving body 6B, and the third driving body 6C.
Such drive unit 6 can rotate the first screw 5A at the first number R1 of rotations, the second screw 5B at the second number R2 of rotations, and the third screw 5C at the third number R3 of rotations.

The first screw shaft 5Aa of the first screw 5A is provided therein with the through hole 5Ac extending axially of the shaft.
The first driving body 6A is arranged, for example, at the end 5Ae of the first screw shaft 5Aa on the upstream side in the conveying direction "a".
Such first screw 5A can be rotated without interfering with the movement of the raw material in the conveying direction "a".

It is desirable that, passing through the through hole 5Ac of the first screw 5A, the second screw 5B extends from the upstream side to the downstream side of the first screw 5A.

The second screw shaft 5Ba of the second screw 5B is, for example, provided therein with the through hole 5Bc extending axially of the shaft.
The second driving body 6B is arranged, for example, at the end 5Be of the second screw shaft 5Ba on the upstream side in the conveying direction "a".
Such second screw 5B can be rotated without interfering with the movement of the raw material in the conveying direction "a".

It is desirable that, passing through the through-hole 5Bc of the second screw 5B, the third screw 5C extends from the upstream side to the downstream side of the second screw 5B.
The third driving body 6C is arranged, for example, at the end 5Ce of the third screw shaft 5Ca on the upstream side in the conveying direction "a".
Such third screw 5C can be rotated without interfering with the movement of the raw material in the conveying direction "a".

It is desirable that the pitch P1 and the height H1 of the first flight 5Ab of the first screw 5A, the pitch P2 and the height H2 of the second flight 5Bb of the second screw 5B, and the pitch P3 and the height H3 of the third flight 5Cb of the third screw 5C are each appropriately set according to the function required for each screw.

It is desirable that the temperature of the first screw 5A, the temperature of the second screw 5B, and the temperature of the third screw 5C are each appropriately set according to the function required for each screw.
In such screw 5, by rotating the respective screws at the first number R1 of rotations, the second number R2 of rotations, and the third number R3 of rotations that are respectively suitable for the respective screws, it becomes possible to further improve the quality of the discharged raw material.

In the seventh embodiment, the rotational direction of the first screw 5A and the rotational direction of the second screw 5B are different from each other.
Such screw 5 can impart large shear to the raw material when transferring the raw material from the first screw 5A to the second screw 5B, which helps to improve the quality of the discharged raw material.

In the seventh embodiment, the feeding portion 3 includes the first feeding portion 3A provided at the position of the first screw 5A, and the second feeding portion 3B provided at the position of the second screw 5B.
Such feeding portion 3 can feed necessary raw materials according to the positions of the feeding portions.

The extruder 71 of the seventh embodiment comprises the kneading zone 7 for kneading the raw material, the pressurizing portion 8 for pressurizing the raw material, and the degassing zone 11 for removing gas contained in the raw material.
The kneading zone 7 of the seventh embodiment is arranged at the position of the first screw 5A. Such kneading zone 7 can perform the function of kneading to the raw material immediately when being fed.

The pressurizing portion 8 of the seventh embodiment is arranged at the position of the second screw 5B. Such pressurizing portion 8 can exert a function of pressurizing the kneaded raw materials without generating heat, and can improve the quality of the discharged raw material.

The degassing zone 11 of the seventh embodiment is arranged at the position of the third screw 5C. The degassing zone 11 comprises, for example, the dam zone 12 for discharging gas from the raw material, and the vent zone 13 for sucking gas from the inside of the barrel 2.
Such degassing zone 11 can perform the function of discharging unnecessary gas from the pressurized raw material, and improve the quality of the discharged raw material.

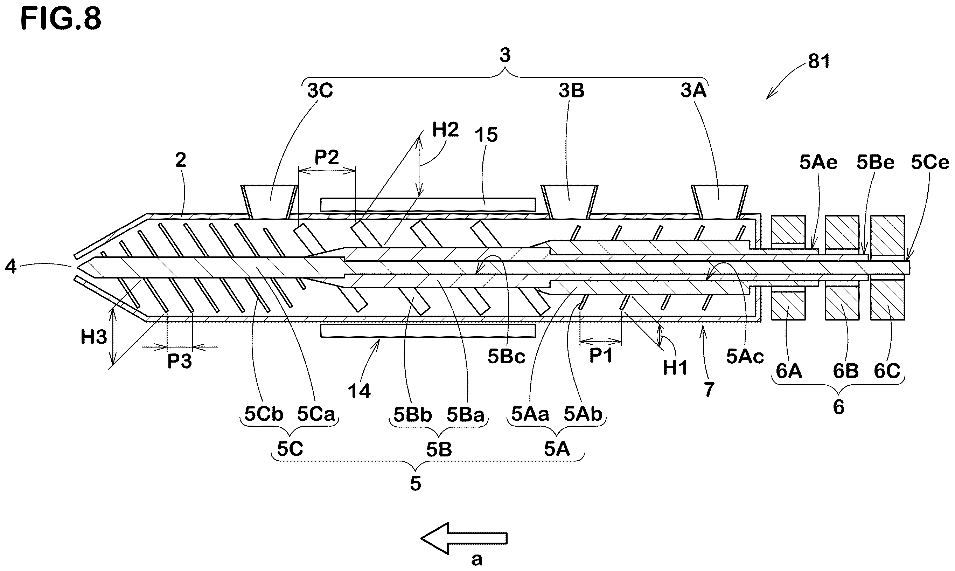

FIG. 8 is a cross-cross sectional view of an extruder 81 as an eighth embodiment according to the present invention.
The same components as those in the above-described embodiments are denoted by the same reference numerals, and the description thereof will be omitted.

As shown in FIG. 8, the extruder 81 of the eighth embodiment comprises the barrel 2, the feeding portion 3, the discharging portion 4, the screw 5, and the drive unit 6, similarly to the extruder 1 described above.

The screw 5 of the eight embodiment includes the first screw 5A, the second screw 5B, and the third screw 5C. The first screw 5A preferably comprises the first screw shaft 5Aa and the first flight 5Ab. The second screw 5B preferably comprises the second screw shaft 5Ba and the second flight 5Bb. The third screw 5C preferably comprises the third screw shaft 5Ca and the third flight 5Cb.

In the eighth embodiment, the first screw 5A can be rotated at a first number R1 of rotations per unit time, the second screw 5B can be rotated at a second number R2 of rotations per unit time which is different from the first number R1 of rotations, and the third screw 5C can be rotated at a third number R3 of rotations per unit time which is different from the second number R2 of rotations per unit time.
Therefore, the extruder 81 of the eighth embodiment can adjust the number of rotations per unit time of the respective screw depending on their positions within the barrel 2.

The drive unit 6 comprises, for example, the first driving body 6A, the second driving body 6B, and the third driving body 6C. Such drive unit 6 can rotate the first screw 5A at the first number R1 of rotations, the second screw 5B at the second number R2 of rotations, and the third screw 5C at the third number R3 of rotations.

The first screw shaft 5Aa of the first screw 5A is provided therein with the through hole 5Ac extending axially of the shaft.
The first driving body 6A is arranged, for example, at the end 5Ae of the first screw shaft 5Aa on the upstream side in the conveying direction "a".
Such first screw 5A can be rotated without interfering with the movement of the raw material in the conveying direction "a".

It is desirable that, passing through the through hole 5Ac of the first screw 5A, the second screw 5B extends from the upstream side to the downstream side of the first screw 5A.

The second screw shaft 5Ba of the second screw 5B is, for example, provided therein with the through hole 5Bc extending axially of the shaft.
The second driving body 6B is arranged, for example, at the end 5Be of the second screw shaft 5Ba on the upstream side in the conveying direction "a".
Such second screw 5B can be rotated without interfering with the movement of the raw material in the conveying direction "a".

It is desirable that, passing through the through-hole 5Bc of the second screw 5B, the third screw 5C extends from the upstream side to the downstream side of the second screw 5B.
The third driving body 6C is arranged, for example, at the end 5Ce of the third screw shaft 5Ca on the upstream side in the conveying direction "a".
Such third screw 5C can be rotated without interfering with the movement of the raw material in the conveying direction "a".

It is desirable that the pitch P1 and the height H1 of the first flight 5Ab of the first screw 5A, the pitch P2 and the height H2 of the second flight 5Bb of the second screw 5B, and the pitch P3 and the height H3 of the third flight 5Cb of the third screw 5C are each appropriately set according to the function required for each screw.

It is desirable that the temperature of the first screw 5A, the temperature of the second screw 5B, and the temperature of the third screw 5C are each appropriately set according to the function required for each screw.
In such screw 5, by rotating the respective screws at the first number R1 of rotations, the second number R2 of rotations, and the third number R3 of rotations that are respectively suitable for the respective screws, it becomes possible to further improve the quality of the discharged raw material.

In the eighth embodiment, the rotational direction of the first screw 5A and the rotational direction of the second screw 5B are different from each other.
Such screw 5 can impart large shear to the raw material when transferring the raw material from the first screw 5A to the second screw 5B, which helps to improve the quality of the discharged raw material.

The feeding portion 3 of the eighth embodiment includes
the first feeding portion 3A and the second feeding portion 3B arranged at the position of the first screw 5A, and
the third feeding portion 3C arranged at the position of the third screw 5C.
The second feeding portion 3B may be arranged, for example, at the position of the second screw 5B.
Such feeding portion 3 can feed necessary raw materials according to the positions of the feeding portions.

The extruder 81 of the eighth embodiment comprises the kneading zone 7 for kneading the raw material, and a cooling zone 14 for cooling the raw material.

The kneading zone 7 of the seventh embodiment is arranged at the position of the first screw 5A. Such kneading zone 7 can perform the function of kneading to the raw material immediately when being fed.

The cooling zone 14 of the eighth embodiment is arranged at the position of the second screw 5B. The cooling zone 14 comprises, for example, a cooling device 15 provided on the outside of the barrel 2. The cooling zone 14 may, for example, circulate cooling water inside the second flight 5Bb.
Such cooling zone 14 can exert a function of generating shear, while suppressing the heat accumulation in the raw material, and helps to improve the quality of the discharged raw material.

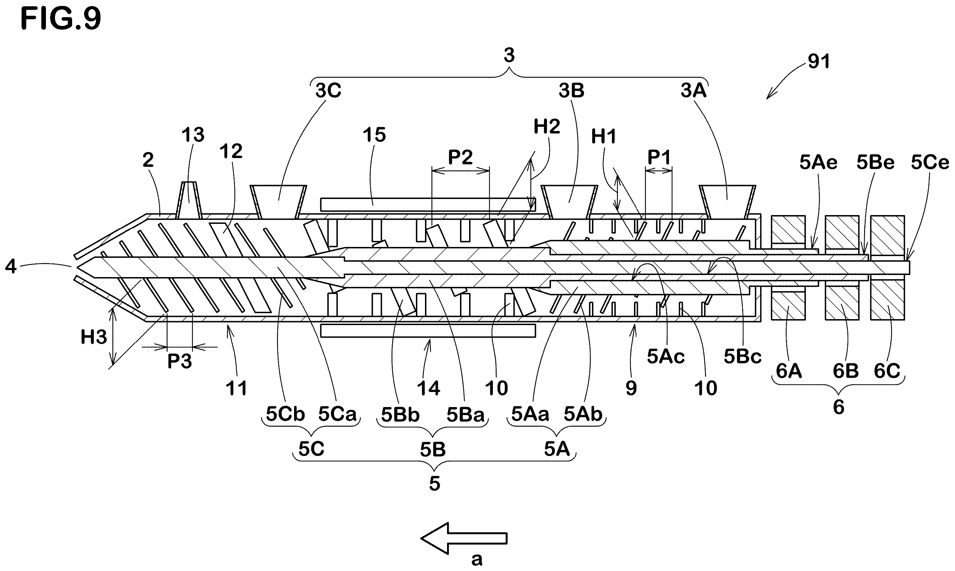

FIG. 9 is a cross-cross sectional view of an extruder 91 as a ninth embodiment according to the present invention.
The same components as those in the above-described embodiments are denoted by the same reference numerals, and the description thereof will be omitted.

As shown in FIG. 9, the extruder 91 of the ninth embodiment comprises the barrel 2, the feeding portion 3, the discharging portion 4, the screw 5, and the drive unit 6, similarly to the extruder 1 described above.

The screw 5 of the ninth embodiment includes the first screw 5A, the second screw 5B, and the third screw 5C. The first screw 5A preferably comprises the first screw shaft 5Aa and the first flight 5Ab. The second screw 5B preferably comprises the second screw shaft 5Ba and the second flight 5Bb. The third screw 5C preferably comprises the third screw shaft 5Ca and the third flight 5Cb.

In the ninth embodiment, the first screw 5A can be rotated at a first number R1 of rotations per unit time, the second screw 5B can be rotated at a second number R2 of rotations per unit time which is different from the first number R1 of rotations, and the third screw 5C can be rotated at a third number R3 of rotations per unit time which is different from the second number R2 of rotations per unit time.
Therefore, the extruder 91 of the ninth embodiment can adjust the number of rotations per unit time of the respective screw depending on their positions within the barrel 2.

The drive unit 6 comprises, for example, the first driving body 6A, the second driving body 6B, and the third driving body 6C. Such drive unit 6 can rotate the first screw 5A at the first number R1 of rotations, the second screw 5B at the second number R2 of rotations, and the third screw 5C at the third number R3 of rotations.

The first screw shaft 5Aa of the first screw 5A is provided therein with the through hole 5Ac extending axially of the shaft.
The first driving body 6A is arranged, for example, at the end 5Ae of the first screw shaft 5Aa on the upstream side in the conveying direction "a".
Such first screw 5A can be rotated without interfering with the movement of the raw material in the conveying direction "a".

It is desirable that, passing through the through hole 5Ac of the first screw 5A, the second screw 5B extends from the upstream side to the downstream side of the first screw 5A.

The second screw shaft 5Ba of the second screw 5B is, for example, provided therein with the through hole 5Bc extending axially of the shaft.
The second driving body 6B is arranged, for example, at the end 5Be of the second screw shaft 5Ba on the upstream side in the conveying direction "a".
Such second screw 5B can be rotated without interfering with the movement of the raw material in the conveying direction "a".

It is desirable that, passing through the through-hole 5Bc of the second screw 5B, the third screw 5C extends from the upstream side to the downstream side of the second screw 5B.
The third driving body 6C is arranged, for example, at the end 5Ce of the third screw shaft 5Ca on the upstream side in the conveying direction "a".
Such third screw 5C can be rotated without interfering with the movement of the raw material in the conveying direction "a".

It is desirable that the pitch P1 and the height H1 of the first flight 5Ab of the first screw 5A, the pitch P2 and the height H2 of the second flight 5Bb of the second screw 5B, and the pitch P3 and the height H3 of the third flight 5Cb of the third screw 5C are each appropriately set according to the function required for each screw.

It is desirable that the temperature of the first screw 5A, the temperature of the second screw 5B, and the temperature of the third screw 5C are each appropriately set according to the function required for each screw.
In such screw 5, by rotating the respective screws at the first number R1 of rotations, the second number R2 of rotations, and the third number R3 of rotations that are respectively suitable for the respective screws, it becomes possible to further improve the quality of the discharged raw material.

In the ninth embodiment, the rotational direction of the first screw 5A and the rotational direction of the second screw 5B are different from each other.
Such screw 5 can impart large shear to the raw material when transferring the raw material from the first screw 5A to the second screw 5B, which helps to improve the quality of the discharged raw material.

The feeding portion 3 of the ninth embodiment includes the first feeding portion 3A and the second feeding portion 3B arranged at the position of the first screw 5A, and the third feeding portion 3C arranged at the position of the third screw 5C. Such feeding portion 3 can feed necessary raw materials according to the positions of the feeding portions.

The extruder 91 of the ninth embodiment comprises the dividing zone 9 for dividing the raw material, the cooling zone 14 for cooling the raw material, and the degassing zone 11 for removing gas contained in the raw material.

The dividing zone 9 of the ninth embodiment is arranged at the position of the first screw 5A and the position of the second screw 5B. Each dividing zone 9 comprises, for example, a plurality of the pins 10 protruding from the barrel 2 toward the inside thereof.
Such dividing zones 9 can efficiently plasticize the fed raw material, and improve the quality of the discharged raw material.

The cooling zone 14 of the ninth embodiment is provided at the position of the second screw 5B. Thereby, the second screw 5B of the ninth embodiment has the function of dividing the raw material and the function of cooling the raw material. The cooling zone 14 comprises, for example, the cooling device 15 arranged on the outside of the barrel 2. The cooling zone 14 may, for example, circulate cooling water inside the second flight 5Bb, or may circulate cooling water inside the pins 10 provided at the position of the second screw 5B.
Such cooling zone 14 can exert a function of generating shear, while suppressing the heat accumulation in the raw material, and helps to improve the quality of the discharged raw material.

The degassing zone 11 of the ninth embodiment is arranged at the position of the third screw 5C. The degassing zone 11 comprises, for example, the dam zone 12 for discharging gas from the raw material, and the vent zone 13 for sucking gas from the inside of the barrel 2. Such degassing zone 11 can perform the function of discharging unnecessary gas from the plasticized raw material, and can improve the quality of the discharged raw material.

While detailed description has been made of especially preferable embodiments of the present invention, the present invention can be embodied in various forms without being limited to the illustrated embodiments.

### Description of the reference signs

- 1: extruder
- 2: barrel
- 3: feeding portion
- 5: screw
- 5A: first screw
- 5B: second screw
- 5C: third screw
- 8: pressurizing portion
- 9: dividing zone
- 11: degassing zone
- 14: cooling zone

## Claims

1. An extruder comprising:
a barrel;
a feeding portion for feeding a raw material into the barrel; and
a screw for moving the fed raw material in a conveying direction of the raw material,
wherein
the screw includes a first screw disposed on an upstream side in the conveying direction, and a second screw disposed coaxially with the first screw on the downstream side in the conveying direction of the first screw,
the first screw is rotatable at a first rotation number per unit time, and
the second screw is rotatable at a second number of rotations per unit time which is different from the first number of rotations.

2. The extruder according to claim 1, wherein
the second number of rotations is smaller than the first number of rotations.

3. The extruder according to claim 1 or 2, wherein
the first number of rotations is adjusted based on a rotational torque of the first screw, and
the second number of rotations is adjusted based on a rotational torque of the second screw.

4. The extruder according to claim 1, 2 or 3, wherein
a rotational direction of the first screw and a rotational direction of the second screw are different from each other.

5. The extruder according to claim 1, 2, 3 or 4, wherein
a pressurizing portion for pressurizing the raw material is provided at the position of the second screw.

6. The extruder according to any one of claims 1 to 5, wherein
the first screw is provided therein with a through-hole extending axially of the first screw, and
the second screw extends from the upstream side to the downstream side of the first screw through the through hole of the first screw.

7. The extruder according to any one of claims 1 to 6, wherein
the screw includes a third screw arranged coaxially with the second screw on the downstream side of the second screw, and
the third screw is rotatable at a third number of rotations per unit time which is different from the second number of rotations.

8. The extruder according to of claim 7, wherein
the feeding portion includes a first feeding portion provided at the position of the first screw, and a second feeding portion provided at the position of the second screw or alternatively the third screw.

9. The extruder according to claim 7 or 8, wherein
a degassing zone for removing gas contained in the raw material is provided at the position of the third screw.

10. The extruder according to any one of claims 1 to 9, wherein
a dividing zone for dividing the raw material is provided at the position of the first screw.

11. the extruder according to any one of claims 1 to 10, wherein
a cooling zone for cooling the raw material is provided at the position of the second screw.
